Europäisches Patentamt

European Patent Office

Office européen des brevets

(11) Publication number: **0 068 756**
A1

(12) **EUROPEAN PATENT APPLICATION**

(21) Application number: 82303184.4

(51) Int. Cl.³: **H 02 P 6/02**

(22) Date of filing: 18.06.82

(30) Priority: 25.06.81 GB 8119600

(43) Date of publication of application: 05.01.83
Bulletin 83/1

(84) Designated Contracting States: CH DE FR GB LI

(71) Applicant: CRANFIELD INSTITUTE OF TECHNOLOGY,
Cranfield, Bedford MK43 0AL (GB)

(72) Inventor: Thomas, David Kenneth, 4 Alexandra Court
Rothschild Road, Leighton Buzzard Bedfordshire
LU7 7SZ (GB)
Inventor: Bugge, John Fawcett Roden, No. 1 The Old
Vicarage Old Vicarage Lane Dunston, Stafford
Staffordshire, ST18 9AB (GB)

(74) Representative: Billington, Lawrence Emlyn et al,
HASELTINE LAKE & CO Hazlitt House 28 Southampton
Buildings Chancery Lane, London WC2A 1AT (GB)

(54) **Brushless DC motors.**

(57) There is provided a brushless motor (1) of the kind having
two relatively movable elements comprising a first motor element, having a field winding having at least one phase, and a
second motor element having at least one pole pair, said field
winding being connected to receive excitation current from an
excitation current generator comprising a controllable digital-
to-analogue converter (8, 9) operable to produce from a dc
source (9') a current of approximately sinusoidal waveform for
exciting the or each phase of said filed winding, there being a
feedback path from said motor (1) to said generator, said path
comprising a signal generator arrangement arranged firstly to
produce a first, repetitive, signal the repetition rate of which is
related to the relative speed of said motor elements and from
which first signal said current is digitally synthesised by said
converter, and secondly to define the relative position of said
motor elements to govern the phase relationship between said
excitation current and said pole pair or pairs.

## BRUSHLESS DC MOTORS

This invention relates to brushless DC motors and particularly concerns the drive and control of such motors. A particular application is to the drive system of a phonograph turntable.

The drive of brushless DC motors is well established with the use of Hall effect devices or phototransistors to achieve commutation. The principal purpose of such commutation is to control the excitation of the field windings such that the magnetic field produced is maintained as close as possible to ninety electrical degrees ahead of the rotor field. In this manner the torque/current ratio is kept to a maximum.

It is usual in the construction of such motors for the rotor to be the inner element, to be permanently magnetised and to consist of multiple pole pairs.

Field drives fall into two main categories, square wave and sine wave.

The main advantage of a square wave drive is simplicity of the control and switching electronics derived from the commutation signal, as these can be of the digital type. The principal disadvantage of a square wave drive is the introduction of a torque ripple. This can be reduced by increasing the number of phases of operation at the expense of more complicated drive electronics. The use of a three-phase delta winding is most common.

The advantage of sine wave operation is very low torque ripple and a higher motor efficiency. However, this method has the disadvantage of greater complexity in the drive electronics and the need for higher power dissipation in the output drive amplifiers. Hall effect generators activated by the rotor field are most commonly used in this application as they provide the required commutation in sine wave form. This makes the phase and wave form signals for drive generation directly available.

According to this invention, there is provided a brushless motor of the kind having two relatively movable elements comprising a first motor element, having a field winding having at least one phase, and a second motor element having at least one pole pair, the field winding being connected to receive excitation current from an excitation current generator comprising a controllable digital-to-analogue converter operable to produce from a dc source a current of approximately sinusoidal waveform for exciting the or each phase of the field winding, there being a feedback path from the motor to the generator, the path comprising a signal generator arrangement arranged (1) to produce a first, repetitive, signal the repetition rate of which is related to the relative speed of the motor elements and from which first signal said current is digitally synthesised by said converter and (2) to define the relative position of the motor elements to govern the phase relationship between the excitation current and the pole pair or pairs.  Thus the field excitation frequency can be directly linked to the motor speed so stabilising the relationship between the fields of the motor elements.  In particular, the motor may have a desired value frequency source and means for comparing the frequency of the frequency source with the frequency of said repetitive signal and for controlling the excitation current according to any frequency difference to achieve motor speed control.

The commutation phase relationship of the field winding and the pole pairs can be preset or adjusted by programming of digital control logic, adjustment being co-ordinated in relationship to the signal generator arrangement defining relative position.  Associated with this aspect of the motor can be means of pre-programming the desired interphase relationships of the field excitation currents.

It will be apparent that it is also possible to achieve control of motor speed, torque or position in relationship to an external frequency, digital or analogue signal.  Whilst the motor may have only one phase and one pole pair, preferably there are at least two phases and/or at least two pole pairs.

Described below is a particular example of the invention in the drive system of a high fidelity phonograph turntable where exactness and constancy of speed are essential qualities.

For a better understanding of the invention and to show how the same may be carried into effect, reference will now be made, by way of example, to the accompanying drawings, in which:-

Figure 1 shows a block diagram of a control circuit for a preset constant speed, low speed drive suitable for a phonograph turntable;

Figure 2 shows an example of a wave-form generated by the circuit of Figure 1;

Figure 3 shows details of a block of Figure 1; and

Figures 4 and 5 show cross-sections through a preferred drive arrangement for a phonograph turntable.

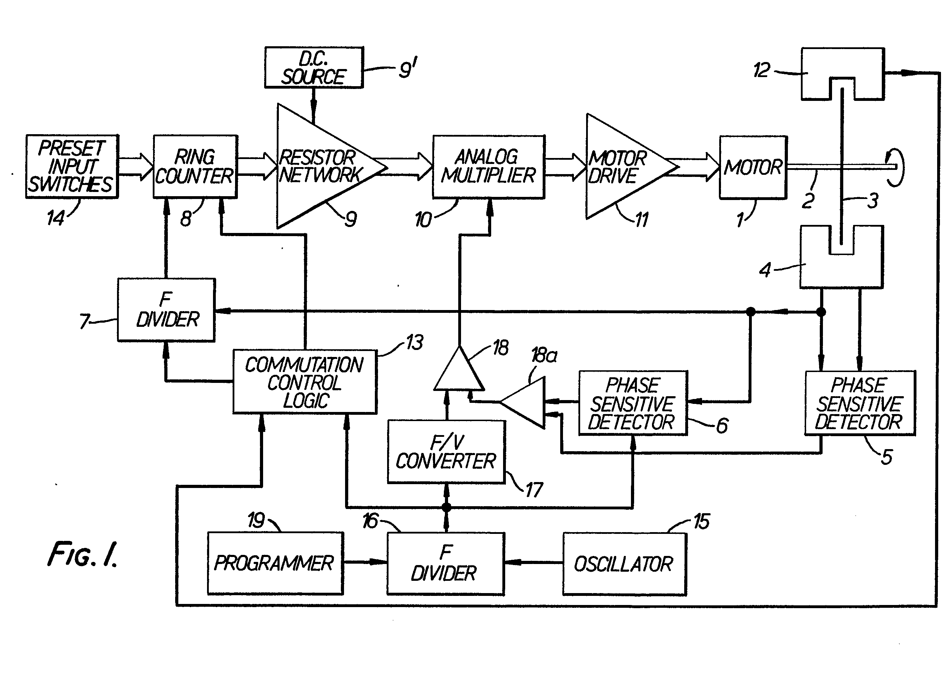

Figure 1 is a block diagram of the electronic control circuit arrangement for a drive motor 1 of a phonograph turntable, the motor having a permanent magnet rotor and a stator with field windings arranged in 3-phase delta configuration. In this particular example the rotor has five pole-pairs.

Connected to the motor output shaft 2 is an optical grating disc 3. The grating has two bands of lines. In this particular example one band contains 240 lines, equally and accurately disposed, which are detected by photosensors 4. In this particular embodiment, two photosensors are used almost 180 degrees apart but arranged for one to give its signal in quadrature to the other. In this example, when the shaft 2 is rotating at 33⅓ rpm, the output from each photosensor 4 has an output frequency of 133⅓ Hz.

The output from one of the photosensors 4 is fed into a frequency divider 7 which is a "Divide by four" unit and which therefore produces an output signal of 33⅓ Hz. The photosensors 4 also feed phase sensitive detectors 5 and 6. The output from divider 7 is fed into a presettable ring counter 8 whose outputs are sequentially switched so as to complete one output cycle for each set of twelve input pulses.

The logic outputs from ring counter 8 are fed into a resistor network 9 fed by DC source 9'. The analogue values produced by the network go to an amplifier, also contained in block 9. The resistor network in 9 is arranged and connected such that the currents in the resistors are selectively summed so that they can then be filtered and converted from current to voltage to give an approximately sine-wave output. In this example the output from network 9 is 3-phase at 2 7/9 Hz.

The outputs from network 9 are fed into an analogue multiplier 10 which in turn drives a power amplifier 11 supplying currents to the field winding phases of motor 1.

In this particular embodiment, the multiplier 10 has three channels, one for each phase, and is of the four quadrant type. This arrangement extends the control action on the motor by permitting torque reversal. This same result can also be achieved by logic means.

The amplifier 11 has a channel for each phase.

In this example the frequency supplied to the motor (which has five pole-pairs) is 2 7/9 Hz and will drive it at a synchronous speed of 5/9 Hz, or 33⅓ rpm as previously determined.

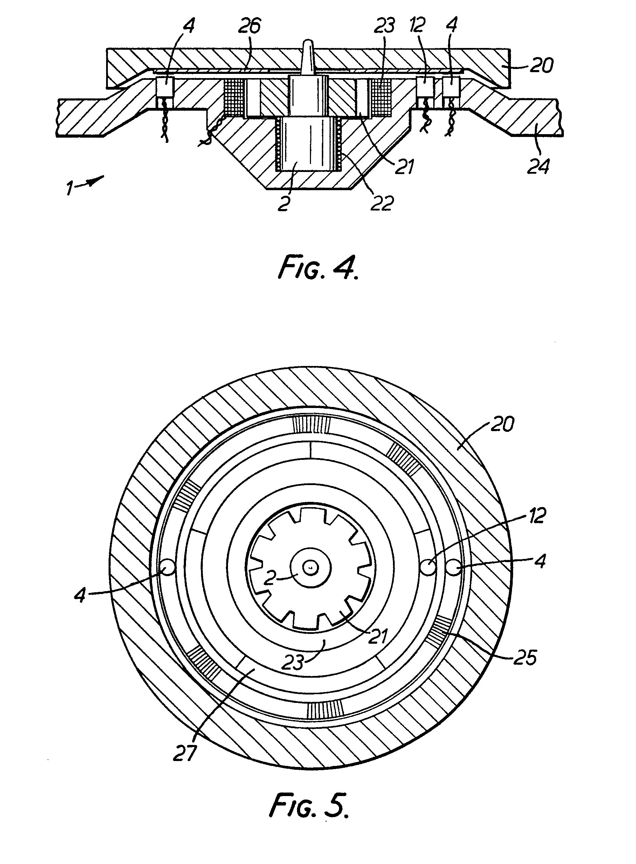

In order that the motor may be operated at its best efficiency, the optimum phase relationship must exist between field and rotor poles; this is normally 90 electrical degrees. This relationship can be achieved by steps including the sensing of pole position with the aid of the grating disc. In this example, the second grating band is provided for this purpose. This second grating band has a line corresponding to each pole-pair of the rotor. This achieves faster starting, which may be important in this case, but in strict terms, as may be suitable for other embodiments, only one line in the second band need exist. It is not necessary for the grating lines to be geometrically aligned with the rotor pole-pairs although it would be a manufacturing advantage to have some fixed relative orientation. In this example, the second band exists as five equispaced lines arranged on a suitable pitch circle on disc 3. The lines are detected by photosensor 12 which supplies an input to a commutation control logic circuit 13, to be described in more detail hereinafter. One action of circuit 13 is to cause the outputs of the ring-counter 8 to be set to provide a specific field winding current according to preset input values supplied by a phase presetting logic circuit 14 on triggering by photosensor 12. In this example circuit 14 provides manually switched logic levels. However, in other applications where phase adjustment may be an advantage, it may be preferable to have this element under automatic control. These input values are programmed according to two requirements. The first is that the outputs from ring-counter 8 are to be ordered in their correct running sequence and the second is that the phasing of the motor supply is instantaneously to be adjusted to give the required field/rotor pole relationship. In the arrangement shown, this action is required each time that the motor is started. The sequence of motor start up is described below. In this example logic 13 consists of a simple arrangement of flip flops and other digital logic elements, to be illustrated and described with respect to Fig. 3. In a more sophisticated system a microprocessor could control this action as part of its routine function.

At switch-on of the drive control circuits, the counters/dividers may be incorrectly set and also, while the motor itself is switched off, manual movement of the turntable may result in spurious inputs from the photodetectors. To negate these actions, the control logic 13 maintains the counter 8 outputs at logic zero whilst the motor is stationary. When the command to start the motor is given, the control logic 13 disables divider 7. Logic 13 then inputs a series of pulses into ring-counter 8 causing the rotation of the motor to commence. It should be noted that the motor rotates with the field/rotor pole relationship uncontrolled at this moment. As soon as logic 13 receives a signal from sensor 12, the commutation phasing action previously described occurs and the required field/rotor pole relationship is obtained. At this same instant, divider 7 is enabled and the pulse train from logic circuit 13 ceases. Commutation now proceeds continuously as previously described.

In this embodiment, the speed control of the turntable motor is achieved by means of the phase-locked-loop principle. The commutated motor acts as a voltage controlled oscillator, the output of which is the frequency from the sensor 4.

A high stability high frequency oscillator 15 feeds a frequency divider 16 which reduces the frequency to that desired as the output from photosensors 4. In the particular example this is 133⅓ Hz for a turntable speed of 33⅓ rpn. The output from divider 16 is supplied to phase sensitive detector 6 where it is compared with one output from 4. Amplifier 18a outputs a filtered processed analogue signal that is proportional to the phase error between the signals derived from 4 and 16. Both outputs from 4 are compared in phase sensitive detector 5. The output from 5, when also processed in 18a, provides compensation for grating eccentricity errors.

The frequency signal from 16 is also supplied to a frequency-to-voltage converter 17 which outputs a proportional reference analogue signal.

The outputs from 17 and 18a are fed into a summing amplifier 18 whose output signal controls the gain of the multiplier 10. As the speed of the commutated motor is a function of the applied voltage, the control loop is thus completed.

The frequency signal from divider 16 is also fed as a clock supply to control logic circuit 13.

By means of a programmer 19, the control frequency from 16 can be varied. In this particular embodiment limited switched values would be available (together with a fine trimming adjustment) to give 45, 33⅓ and possibly 78 or 16 2/3 rpm at the turntable.

The detectors 4 and 12 combined suitably with grating 3 may be transmissive or reflective or the combination be replaced by other suitable means of speed and position detection capable of being converted to a frequency signal proportional to speed of

-9-

rotation and/or to a signal defining the relative position of the rotor and stator.

The components 15, 16; 17 and 19 may be replaced by one or a number of components providing a fixed or variable frequency source as desired together with a voltage which is a function of this frequency. Similarly any of the functions described above may be performed separately by any required number of discrete components or conversely combined into a reduced number of integrated components. The motor may also incorporate a system for a velocity feedback signal to be summed into amplifier 18 if required.

Thus, by the control and drive system described, the motor turntable speed can be controlled to zero error by the integrating action of the phase sensitive detector 6, while being freely variable according to the reference frequency.

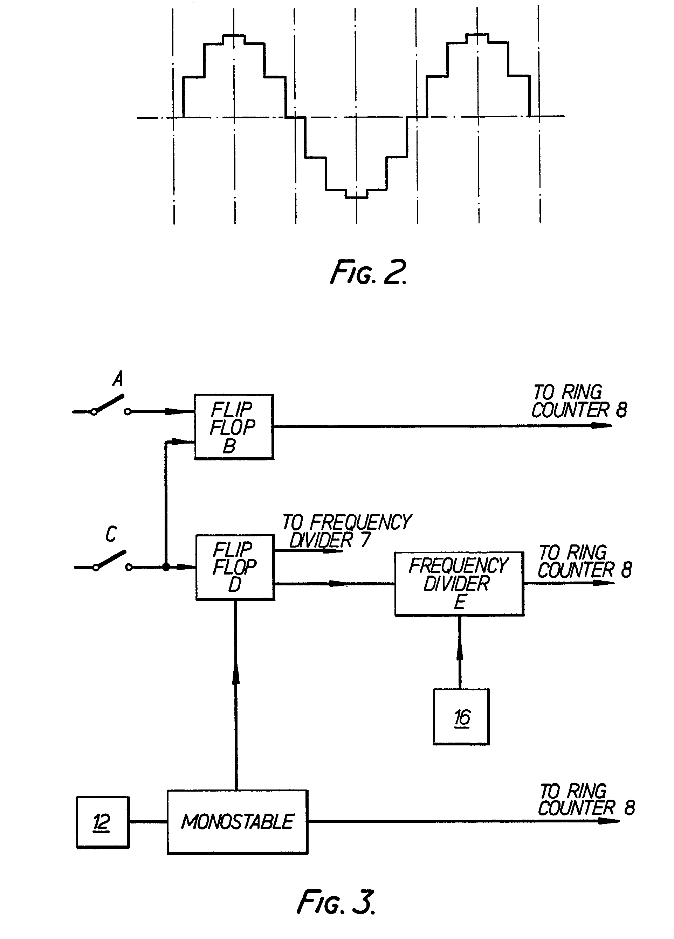

Figure 2 shows the type of digitally derived sine wave approximation synthesised by the ring-counter/resistor-network system when a divide-by-twelve ring-counter is used. The approximation may be improved by suitable filtering. Cruder or more exact approximations to a sine wave may be obtained with the respective use of lesser or greater division. The use of lesser division may result in unwanted modulation or error while greater division leads to greater complexity in electronic construction.

It should be noted in the particular example given that the maximum error of the field/rotor pole phase relationship is $\pm 15^{\circ}$ when locked. Thus, the possible loss in maximum torque due to this error is less than $3\frac{1}{2}\%$.

Fig. 3 shows in detail the arrangement of flip flops etc. which provides the logic 13. At switch-on of the drive control circuits switch A provides a reset pulse to flip-flop B which holds the ring counter 8 at count zero whilst the motor is stationary. When the motor start switch C is closed this provides a pulse which changes over flip-flop B and hence enables the ring counter 8. This pulse also resets a flip-flop D which, in response, inhibits the frequency divider 7 and enables a further frequency divider E. This latter divides the pulses from the divider 16 by sixteen, and the frequency divided pulses from E then drive the ring counter, starting the motor. The purpose of this arrangement is to start the motor with an excitation at a quarter of its final speed to allow it to accelerate initially. The motor is driven at quarter speed until the first position pulse on the optical grating 3 is detected by sensor 12, when a monostable produces a pulse which toggles D and controls the ring counter 8 to load the preset values selected by switches in the circuit 14 into the ring counter to establish the correct phase relationship between the motor poles and the travelling field in the stator winding. Note the ring counter can be set in this manner to any selected one of its twelve states. When D toggles, the frequency divider E is inhibited and the frequency divider 7 is enabled so that the drive for the motor is now generated by the speed grating as sensed by sensor 4.

The monostable triggers in response to every position pulse on the grating 3, to guarantee that the phase relationship stays constant.

Figure 4 shows a cross-section through a preferred construction of a phonograph turntable with direct drive and using reflective photosensors.

Figure 5 is a plan view sectioned at the level of the gratings of Figure 3.

The motor 1 is fixed below a turntable 20, its rotor 21 being mounted directly to the turntable spindle 2 rotating in bearing 22. Stator field coils 23 are mounted in a plinth 24. A speed sensing grating 25 is mounted directly to the turntable 20 (via a grating base 26) and is read by reflective photosensors 4. A position sensing grating 27 lies within grating 25 and is marked on the same base 26. Grating 27 is read by reflective photosensor 12. Grating 25 contains 240 lines and grating 27 contains 5 lines.

Other alternative embodiments of the invention relate to the control of brushless DC motors for positioning or stepping or sequencing applications especially where high accuracy is required. In the case of high speed applications, compensation for electrical time constant, unnecessary at low speeds, may be made with the use of phase adjustment via the ring-counter inputs.

The illustrated and described embodiment provides, in a brushless D.C. motor, constant phase angle control between field and rotor, thereby to maximise torque.

Claims:

1. A brushless motor of the kind having two relatively movable elements comprising a first motor element, having a field winding having at least one phase, and a second motor element having at least one pole pair, said field winding being connected to receive excitation current from an excitation current generator comprising a controllable digital-to-analogue converter operable to produce from a dc source a current of approximately sinusoidal waveform for exciting the or each phase of said field winding, there being a feedback path from said motor to said generator, said path comprising a signal generator arrangement arranged (1) to produce a first, repetitive, signal the repetition rate of which is related to the relative speed of said motor elements and from which first signal said current is digitally synthesised by said converter and (2) to define the relative position of said motor elements to govern the phase relationship between said excitation current and said pole pair or pairs.

.2. A motor as claimed in claim 1, and comprising a desired value frequency source and means for comparing the frequency of said frequency source with the frequency of said repetitive signal and for controlling said excitation current according to any frequency difference to achieve motor speed control.

3. A motor as claimed in claim 2, wherein said comparing means are phase-sensitive so as to provide a phase-locked-loop form of motor speed control.

4. A motor as claimed in any preceding claim, and comprising digital control logic operable, during motor start up, to preset said digital-to-analogue converter to establish the phase of said current relative to the pole pair or pairs in response to said generator arrangement.

5. A motor as claimed in claim 4, wherein said digital logic is operable to maintain said relative phase after start-up and during motor running without reference to said relative position.

6. A motor as claimed in /claim any preceding, wherein said controllable digital-to-analogue converter comprises a presettable ring counter followed by a resistive network.

7. A motor as claimed in claim 4, or 5, or claim 6 when appended thereto, and wherein said digital control logic comprises a commutation control logic circuit operable during a starting up period to supply said digital-to-analogue converter with starting clocking pulses.

8. A motor as claimed in claim 7, wherein said commutation control logic circuit is operable to cause said digital-to-analogue converter to be preset in dependence upon a signal defining said relative positon.

9. A motor as claimed in claim 8, comprising an optical grating disc coupled to the shaft of said motor and operable to produce said first, repetitive, signal and said signal defining said relative position.

10. A motor as claimed in /claim any preceding, when installed as a turntable motor in a phonograph.

FIG. I.

FIG. 2.

A

FLIP
FLOP
B

TO RING
COUNTER 8

C

FLIP
FLOP
D

TO FREQUENCY
DIVIDER 7

FREQUENCY
DIVIDER
E

TO RING
COUNTER 8

16

12

MONOSTABLE

TO RING
COUNTER 8

FIG. 3.

0068756

FIG. 4.

FIG. 5.

European Patent
Office

**EUROPEAN SEARCH REPORT**

Application number

EP 82 30 3184

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 572 586 (MFE)<br>*Page 3, lines 8-46; figure 1* | 1,2,3 | H 02 P 6/02 |
| A | DE-A-2 915 987 (R.BOSCH)<br>*Page 7, line 12 - page 9, line 3; figure 1; page 12, line 17 - page 13, line 4; page 13, lines 10-22* | 1 | |
| A | DE-A-3 021 864 (TOKYO SHIBAURA DENKI)<br>*Page 6, line 12 - page 9, line 7; figure 1* | 1 | |
| A | US-A-4 008 425 (AMPEX)<br>*Column 2, lines 17-65; figure 1* | 1,2,3 | |
| A | FR-A-2 302 620 (P.A.M. DE VALROGER, M.J.LAVET)<br>*Page 3, line 34 - page 4, line 9; figure 1* & US - A - 4 027 213 | 1,4 | TECHNICAL FIELDS SEARCHED (Int. Cl. ³)<br><br>H 02 P |
| A | FR-A-2 266 364 (P.A.M. DE VALROGER, M.J.LAVET)<br>*Page 7, line 25 - page 9, line 8; figures 5-7; page 10, lines 4-14* & US - A - 4 027 213 | 4,5 | |

-/-

The present search report has been drawn up for all claims

| Place of search | Date of completion of the search | Examiner |
|---|---|---|
| THE HAGUE | 01-10-1982 | HOUILLON J.C.P.L. |

0068756

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | FR-A-2 062 601 (RECORDINGS DESIGNS LTD.) *Page 4, line 13 - page 7, line 17; figures 1-6* & US - A - 3 777 246 | 6 | |
| | ----- | | |
| | | | TECHNICAL FIELDS SEARCHED (Int. Cl. ³) |

The present search report has been drawn up for all claims

| Place of search | Date of completion of the search | Examiner |
|---|---|---|
| THE HAGUE | 01-10-1982 | HOUILLON J.C.P.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82